# EUROPEAN PATENT APPLICATION

(11) **EP 4 534 887 A1**
(43) Date of publication of application: **09.04.2025**
(21) Application number: 23811739.4
(22) Date of filing: 18.05.2023
(51) Int. Cl.: F16S 1/10, F16S 1/08, F16S 3/02

(54) **STRUCTURAL BODY**

(30) Priority: 24.05.2022 JP 2022084719
(71) Applicant: Nature Architects Inc., Tokyo 103-0011 (JP)
(72) Inventor: TANIMICHI, Kotaro, Tokyo 103-0011 (JP)
(74) Representative: Kuhnen & Wacker Patent- und Rechtsanwaltsbüro PartG mbB
(86) International application number: PCT/JP2023/018645
(87) International publication number: WO 2023/228866

(57) **Abstract**

A structure is formed based on a basic structure by combining a first structure extending in a predetermined direction with a first repeating shape and a second structure, which is either in a plate shape or extending in the predetermined direction with a second repeating shape, such that a plurality of connection portions are arranged at intervals along the predetermined direction. Furthermore, the structure is formed in a shape in which a distance between the two adjacent connection portions in the predetermined direction is longer than that in the basic structure.

## Description

### Technical Field

The present disclosure relates to a structure.

### Background

Conventionally, a proposed structure is formed by a simple combination of a first structure extending in a predetermined direction with a zigzag shape and a second structure extending in the predetermined direction with a plate shape, such that a plurality of connection portions are arranged at intervals along the predetermined direction (see Non-Patent Documents 1 and 2).

### Citation List

### Patent Document

Non-Patent Document 1: Iwafune, Ohsima and Ochiai, Coded Skeleton, [Online], [Retrieved May 18, 2022], Internet <URL: https://digitalnature.slis.tsukuba.ac.jp/2016/06/coded-skel eton/>
Non-Patent Document 2: Iwafune, Ohsima and Ochiai, Coded skeleton: programmable bodies for shape changing user interfaces, [Online], [Retrieved May 18, 2022], Internet <URL: https://dl.acm.org/doi/10.1145/2945078.2945096>

### Summary

In the basic structure described in Non-Patent Documents 1 and 2, if the distance between two adjacent connection portions in the predetermined direction is relatively short, a relatively large increase in stress and stiffness may occur between these two adjacent connection portions in the predetermined direction when the basic structure is deformed in a specific deformation mode. This localized relatively large increase in stress and stiffness may cause damage or make it difficult to deform into a desired shape.

A main object of a structure of the present disclosure is to provide a structure that prevents the relatively large increase in stress and/or stiffness locally when deformed in the specific deformation mode.

In order to achieve the above main object, the structure of the present disclosure employs the following configuration.

A structure according to the present disclosure is a structure is formed based on a basic structure by combining a first structure extending in a predetermined direction with a first repeating shape and a second structure, which is either in a plate shape or extending in the predetermined direction with a second repeating shape, such that a plurality of connection portions are arranged at intervals along the predetermined direction. Furthermore, the structure is formed in a shape in which a distance between the two adjacent connection portions in the predetermined direction is longer than that in the basic structure.

The structure is formed in the shape in which the distance between the two adjacent connection portions in the predetermined direction is longer than that in the basic structure. Such a configuration prevents the relatively large increase in stress and/or stiffness locally, specifically between the two adjacent connection portions, when deformed in the specific deformation mode. As a result, deforming the structure into a desired shape becomes possible while reducing damage to the structure. Here, examples of the "first repeating shape" and the "second repeating shape" include shapes such as rectangular waves, sinusoidal waves, triangular waves, or spiral shapes, or similar patterns.

### Brief Description of Drawings

FIG. 1 is an external perspective view of a structure 20A of an embodiment,
FIG. 2 is an A-A cross-sectional view of FIG. 1.
FIG. 3 is a B-B cross-sectional view of FIG. 1,
FIG. 4 is a C-C cross-sectional view of FIG. 1,
FIG. 5 is an external perspective view of a structure 20B of a first comparative example,
FIG. 6 is an A-A cross-sectional view of FIG. 5,
FIG. 7 is a B-B cross-sectional view of FIG. 5,
FIG. 8 is a C-C cross-sectional view of FIG. 5,
FIG. 9 is an external perspective view of a first structure 30,
FIG. 10 is an external perspective view of a second structure 40,
FIG. 11 is an external perspective view of a structure 20C of a modification,
FIG. 12 is an A-A cross-sectional view of FIG. 11,
FIG. 13 is a B-B cross-sectional view of FIG. 11,
FIG. 14 is a C-C cross-sectional view of FIG. 11,
FIG. 15 is a D-D cross-sectional view of FIG. 11,
FIG. 16 is an external perspective view of a structure 120A of another modification,
FIG. 17 is an external perspective view of a structure 120B of a second comparative example,
FIG. 18 is an external perspective view of a first structure 130, and
FIG. 19 is an external perspective view of a second structure 140.

### Description of Embodiments

The following describes some aspects of the disclosure with reference to embodiments.

### Embodiment

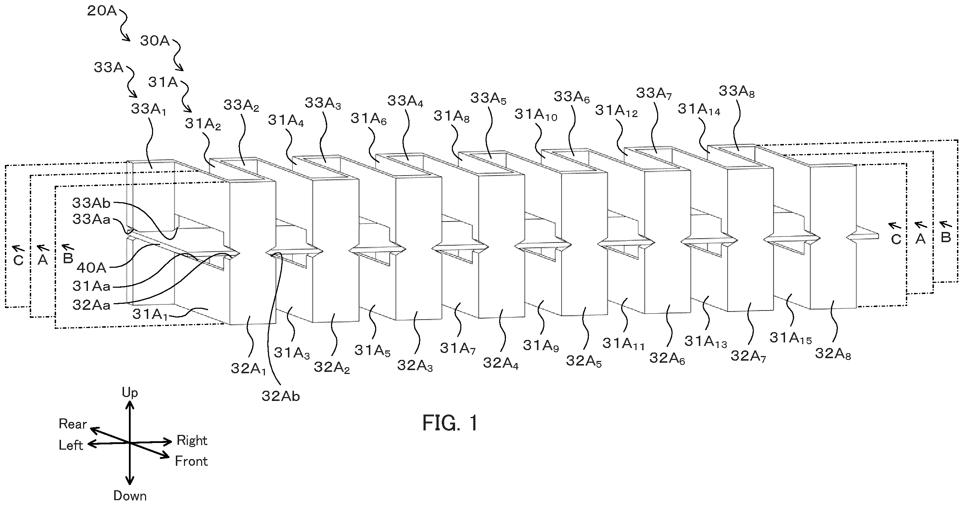

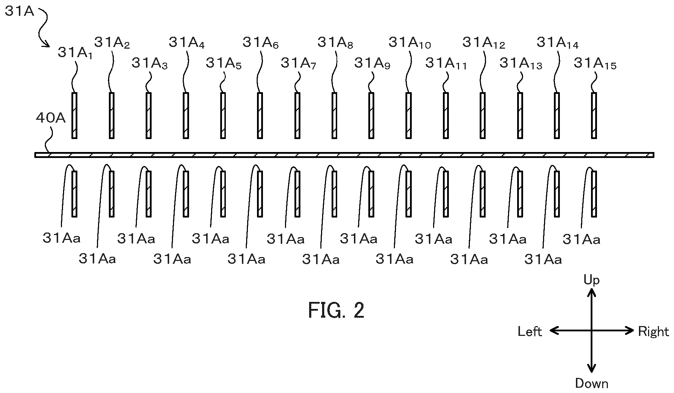

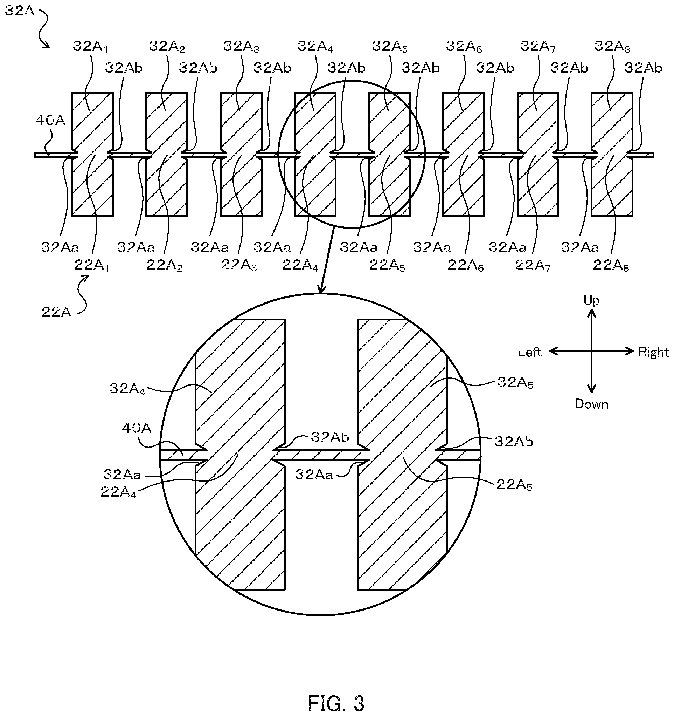

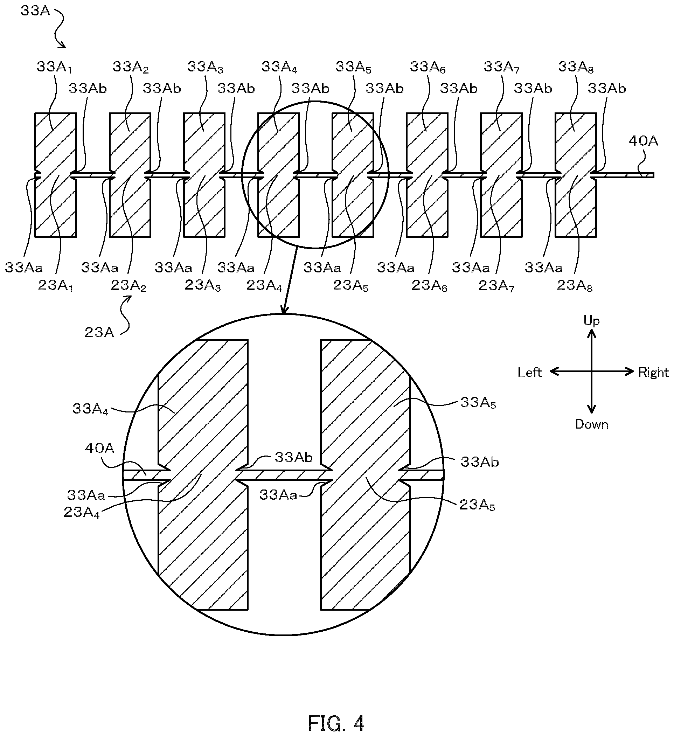

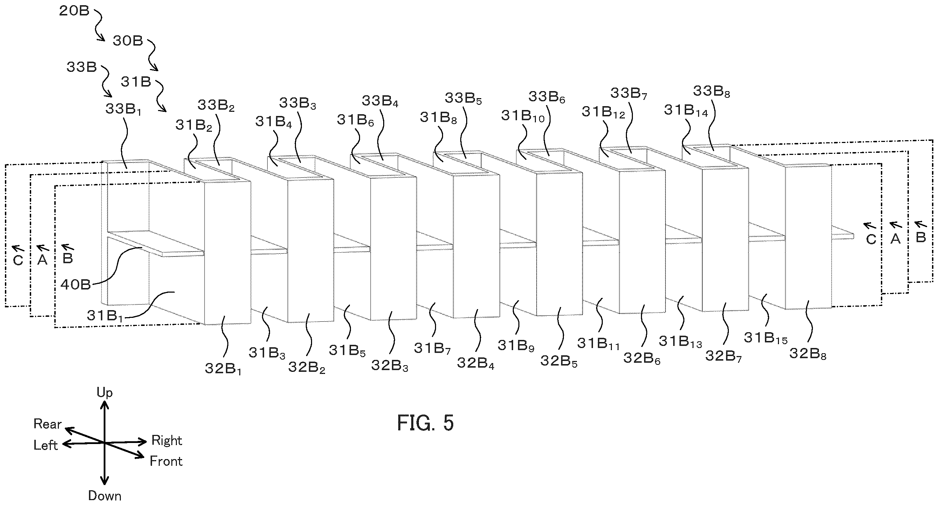

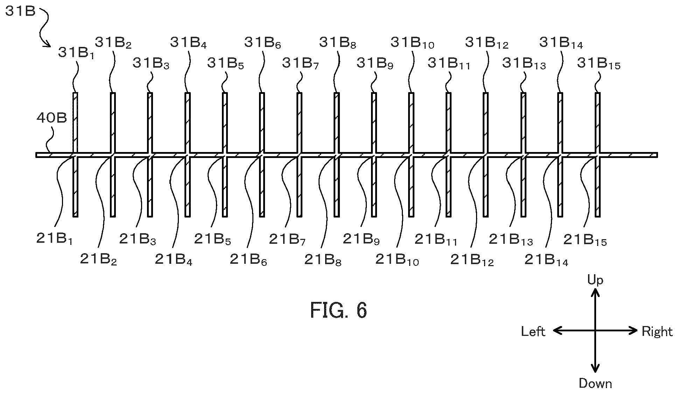

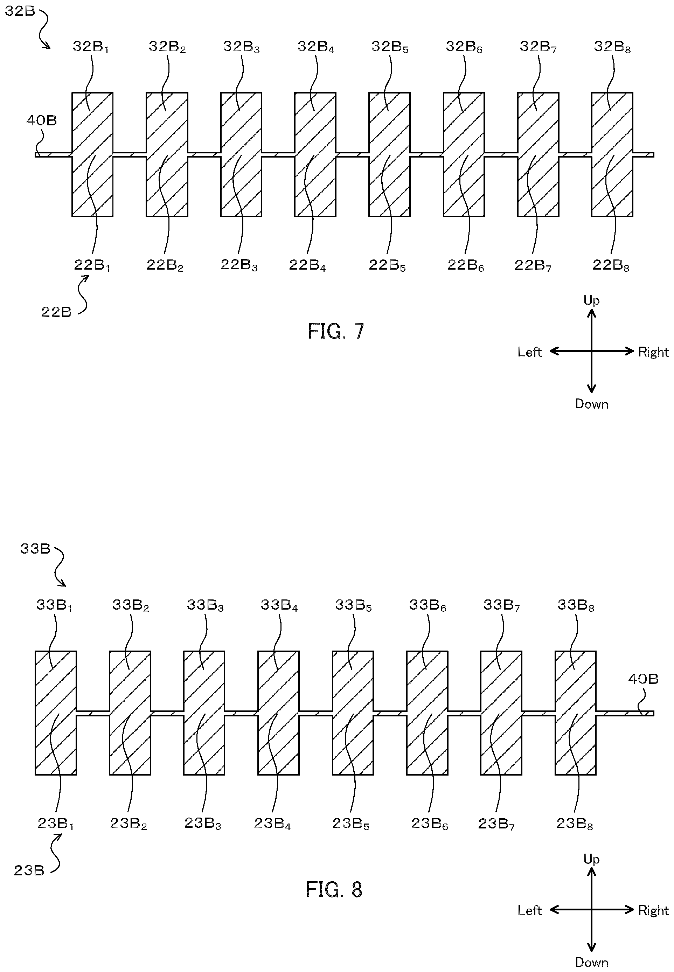

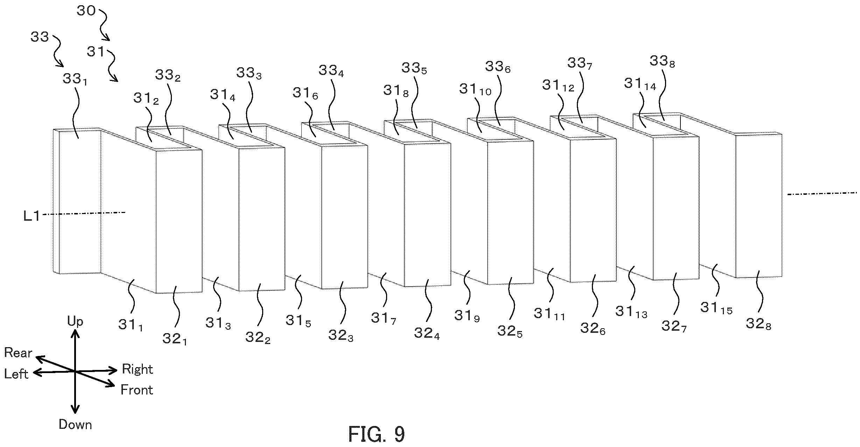

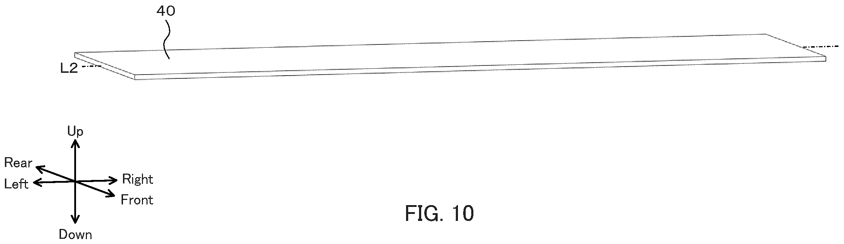

FIG. 1 is an external perspective view of a structure 20A of an embodiment. FIG. 2 is an A-A cross-sectional view of FIG. 1. FIG. 3 is a B-B cross-sectional view of FIG. 1. FIG. 4 is a C-C cross-sectional view of FIG. 1. FIG. 5 is an external perspective view of a structure 20B of a first comparative example. FIG. 6 is an A-A cross-sectional view of FIG. 5. FIG. 7 is a B-B cross-sectional view of FIG. 5. FIG. 8 is a C-C cross-sectional view of FIG. 5. FIG. 9 is an external perspective view of a first structure 30. FIG. 10 is an external perspective view of a second structure 40. The left-right, front-rear and up-down directions are as illustrated in FIGS. 1 to 10. The axis line L1 illustrated in FIG. 9 is a line connecting the centers of the first structure 30 in the up-down and front-rear directions of an arbitrary position in the left-right direction, in the left-right direction. The axis line L2 illustrated in FIG. 10 is a line connecting the centers of the second structure 40 in the up-down and front-rear directions of an arbitrary position in the left-right direction, in the left-right direction. Furthermore, in the following description, the numbers and letters in [] in the specification correspond to the subscripts (subscript numbers) in each FIG.

The structure 20A of the embodiment, illustrated in FIGS. 1 to 4 and the structure (basic structure) 20B of the first comparative example illustrated in FIGS. 5 to 8 are each configured as integrally molded members, formed as single pieces using methods such as injection molding, blow molding, extrusion molding, or 3D printing with resin or rubber materials, or casting, forging, pressing, cutting, extrusion molding, or 3D printing with metal material. The first structure 30 illustrated in FIG. 9 and the second structure 40 illustrated in FIG. 10 are the basic structures used for the structures 20A and 20B. For ease of understanding, the first structure 30 illustrated in FIG. 9, the second structure 40 illustrated in FIG. 10, the structure 20B of the first comparative example illustrated in FIGS. 5 to 8, and the structure 20A of the embodiment illustrated in FIG. 1 are described in the following order.

The first structure 30 illustrated in FIG. 9 is described as illustrated in FIG. **9****,** the first structure 30 is formed in a zigzag shape having a constant thickness and width (length in the up-down direction) and extending in the left-right direction while winding in a rectangular wave shape in the front-rear direction. This first structure 30 includes fifteen front-rear plate-shaped portions 31[1] to 31[15] (each hereinafter simply referred to as "front-rear plate-shaped portion 31"), eight front plate-shaped portions 32[1] to 32[8] (each hereinafter simply referred to as "front plate-shaped portion 32") and eight rear plate-shaped portions 33[1] to 33[8] (each hereinafter simply referred to as "rear plate-shaped portion 33").

The fifteen front-rear plate-shaped portions 31[1] to 31[15] are each formed in a rectangular flat plate shape extending in the front-rear direction with a constant thickness (length in the left-right direction) and width (length in the up-down direction), and are arranged side by side at intervals in the left-right direction. In the embodiment, the fifteen front-rear plate-shaped portions 31[1] to 31[15] are all formed in the same shape, each with the width, length in the front-rear direction, and thickness, in order from the longest side.

The eight front plate-shaped portions 32[1] to 32[8] are each formed in a rectangular flat plate shape extending in the left-right direction with a constant thickness (length in the front-rear direction) and width (length in the up-down direction) . The left end of the front plate-shaped portion 32[i] (i: 1 to 8) is each connected to the front end of the front-rear plate-shaped portion 31[2i-1], and the right end of the front plate-shaped portion 32[j] (j: 1 to 7) is each connected to the front end of the front-rear plate-shaped portion 31[2j]. In the embodiment, the eight front plate-shaped portions 32[1] to 32[8] are all formed in the same shape, each with the width, length in the left-right direction, and thickness in order from the longest side.

The eight rear plate-shaped portions 33[1] to 33[8] are each formed in a rectangular flat plate shape extending in the left-right direction with a constant thickness (length in the front-rear direction) and width (length in the up-down direction) . The right end of the rear plate-shaped portion 33[i] (i: 1 to 8) is each connected to the rear end of the front-rear plate-shaped portion 31[2i-1], and the left end of the rear plate-shaped portion 33[j+1] (j: 1 to 7) is each connected to the rear end of the front-rear plate-shaped portion 31[2j]. In the embodiment, the eight rear plate-shaped portions 33[1] to 33[8] are all formed in the same shape as the eight front plate-shaped portions 32[1] to 32[8], each with the width, length in the left-right direction, and thickness in order from the longest side.

This first structure 30 as a whole is designed to have lower stiffness in up-down bending, which is bending of the left and right ends in the up-down direction relative to the reference state, front-rear bending, which is bending of the left and right ends in the front-rear direction relative to the reference state, and left-right expansion-contraction, which is expansion and contraction in the left-right direction relative to the reference state, than torsion about the left-right axis, which is torsion of the left and right ends relative to the reference state. The reference state of the first structure 30 is the state illustrated in FIG. 9.

The second structure 40 illustrated in FIG. 10 is described next. As illustrated in FIG. 10, the second structure 40 is formed in a rectangular flat plate shape extending in the left-right direction with a constant thickness (length in the up-down direction) and width (length in the front-rear direction). In the embodiment, the thickness of the second structure 40 is designed to be approximately the same as the thickness of the first structure 30. The length of the second structure 40 in the front-rear direction is designed to be slightly shorter than the length of the first structure 30 in the front-rear direction. Furthermore, the length of the second structure 40 in the left-right direction is designed to be slightly longer than the length of the first structure 30 in the left-right direction. The second structure 40 as a whole is designed to have lower stiffness in the up-down bending and the torsion about the left-right axis than in the front-rear bending and left-right expansion-contraction. The reference state of the second structure 40 is the state illustrated in FIG. 10.

The structure 20B of the first comparative example illustrated in FIGS. 5 to 8 is described next. As illustrated in FIGS. 5 to 8, the structure 20B of the first comparative example is formed in a shape of a simple combination of the first structure 30 illustrated in FIG. 9 and the second structure 40 illustrated in FIG. 10 such that the axis lines L1 of the first structure 30 and L2 of the second structure 40 aligned. Thus, the structure 20B of the first comparative example includes the first structure 30B and the second structure 40B in a shape corresponding (similar) to the first structure 30 and the second structure 40.

This first structure 30B includes fifteen front-rear plate-shaped portions 31B[1] to 31B[15], eight front plate-shaped portions 32B[1] to 32B[8] and eight rear plate-shaped portions 33B[1] to 33B[8] in a shape corresponding to the fifteen front-rear plate-shaped portions 31[1] to 31[15], the eight front plate-shaped portions 32[1] to 32[8] and the eight rear plate-shaped portions 33[1] to 33[8] of the first structure 30.

In the structure 20B of the first comparative example, as illustrated in FIG. 6, the fifteen front-rear plate-shaped portions 31B[1] to 31B[15] of the first structure 30B are connected to the second structure 40B by fifteen connection portions 21B[1] to 21B[15] (each hereinafter simply referred to as "connection portion 21B"). As illustrated in FIG. 7, the eight front plate-shaped portions 32B[1] to 32B[8] of the first structure 30B are connected to the second structure 40B by eight connection portions 22B[1] to 22B[8] (each hereinafter simply referred to as "connection portion 22B"). Furthermore, as illustrated in FIG. 8, the eight rear plate-shaped portions 33B[1] to 33B[8] of the first structure 30B are connected to the second structure 40B by eight connection portions 23B[1] to 23B[8] (each hereinafter simply referred to as "connection portion 23B"). Thus, in the structure 20B of the first comparative example, the fifteen connection portions 21B appear at intervals along the left-right direction at the central portion in the front-rear direction (other than the front and rear ends), the eight connection portions 22B appear at intervals along the left-right direction at the front end, and the eight connection portions 23B appear at intervals along the left-right direction at the rear end. In the structure 20B, in the left-right direction, the distance between the two adjacent connection portions 21B is equal to the distance between the two adjacent front-rear plate-shaped portions 31B, the distance between the two adjacent connection portions 22B is equal to the distance between the two adjacent front plate-shaped portions 32B, the distance between the two adjacent connection portions 23B is equal to the distance between the two adjacent rear plate-shaped portions 33B. as illustrated in FIGS. 5 to 8, the connection portions 21B, 22B and 23B are connected in the order of each connection portion 23B[1], 21B[1], 22B[1], 21B[2], ..., 22B[8] in a zigzag shape extending in the left-right direction while winding in the front-rear direction.

The structure 20B of the first comparative example is formed in the shape of the simple combination of the first structure 30 (30B), which has lower stiffness in the up-down bending, front-rear bending and left-right expansion-contraction than in the torsion about the left-right axis, and the second structure 40 (40B), which has lower stiffness in the up-down bending and torsion about the left-right axis than in the front-rear bending and left-right expansion-contraction. Therefore, the structure 20B has low stiffness in the up-down bending, which has relatively low stiffness in common with the first and second structures 30B and 40B, than in the front-rear bending, left-right expansion-contraction and torsion about the left-right axis.

The structure 20A of the embodiment illustrated in FIGS. 1 to 4 is described next. As illustrated in FIGS. 1 to **4****,** the structure 20A of the embodiment is formed in a shape based (with some modifications)on the structure 20B of the first comparative example. The structure 20A of the embodiment includes a first structure 30A in a shape based on the first structure 30B and a second structure 40A in a shape corresponding (similar) to the second structure 40B.

This first structure 30A includes fifteen front-rear plate-shaped portions 31A[1] to 31A[15], eight front plate-shaped portions 32A[1] to 32A[8] and eight rear plate-shaped portions 33A[1] to 33A[8] in a shape based (with some modifications) on the fifteen front-rear plate-shaped portions 31B[1] to 31B[15], the eight front plate-shaped portions 32B[1] to 32B[8] and the eight rear plate-shaped portions 33B[1] to 33B[8] of the first structure 30B of the structure 20B.

As illustrated in FIGS. 1 and **2****,** the fifteen front-rear plate-shaped portions 31A[1] to 31A[15] of the first structure 30A differ from the fifteen front-rear plate-shaped portions 31B[1] to 31B[15] of the first structure 30B of the structure 20B in that each of them includes a hole 31Aa. Each hole 31Aa is formed in the vicinity of the central portion of the corresponding front-rear plate-shaped portion 31A in the up-down direction, specifically, extending from upper to lower with respect to the second structure 40A (the upper and lower wall surfaces of each hole 31Aa facing the upper and lower surfaces of the corresponding front-rear plate-shaped portion 31A at intervals). Thus, each of the front-rear plate-shaped portions 31A is not connected to the second structure 40A. Therefore, the structure 20A of the embodiment is formed in a shape in which there is no connection portions between each of the front-rear plate-shaped portions 31A of the first structure 30A and the second structure 40A in the left-right direction at the central portion (other than the front and rear ends) in the front-rear direction. That is, the structure 20A of the embodiment is formed in a shape in which all of the connection portions 21B are removed from the structure 20B of the first comparative example.

As illustrated in FIGS. 1 and 3, the eight front plate-shaped portions 32A[1] to 32A[8] of the first structure 30A differ from the eight front plate-shaped portions 32B[1] to 32B[8] of the first structure 30B of the structure 20B in that each of them includes recesses 32Aa and 32Ab. Each recess 32Aa is formed to be recessed to the right at a constant angle from the upper and lower sides of the second structure 40A on the left end face of the corresponding front plate-shaped portion 32A toward the second structure 40A. Each recess 32Ab is formed to be recessed to the left at a constant angle from the upper and lower sides of the second structure 40A on the right end face of the corresponding front plate-shaped portion 32A toward the second structure 40A. The shape of the recesses 32Aa and 32Ab is not limited thereto. With such recesses 32Aa and 32Ab, the length in the left-right direction of each of the eight connection portions 22A[1] to 22A[8] (each hereinafter simply referred to as "connection portion 22A") between the eight front plate-shaped portions 32A[1] to 32A[8] of the first structure 30A and the second structure 40A is shorter than the length in the left-right direction of each of the eight connection portions 22B[1] to 22B[8] of the first comparative example. Thus, in the structures 20A and 20B of the embodiment and the first comparative example, at the front end in the front-rear direction, the distance between the two adjacent connection portions 22A of the structure 20A in the left-right direction is longer than the distance between the two adjacent connection portions 22B of the structure 20B (the distance between the two adjacent front plate-shaped portions 32A and 32A of the structures 20A and 20B).

As illustrated in FIGS. 1 and **4****,** the eight rear plate-shaped portions 33A[1] to 33A[8] of the first structure 30A differ from the eight rear plate-shaped portions 33B[1] to 33B[8] of the first structure 30B of the structure 20B in that each of them includes recesses 33Aa and 33Ab. Each recess 33Aa is formed to be recessed to the right at a constant angle from the upper and lower sides of the second structure 40A on the left end face of the corresponding rear plate-shaped portion 33A toward the second structure 40A. Each recess 33Ab is formed to be recessed to the left at a constant angle from the upper and lower sides of the second structure 40A on the right end face of the corresponding rear plate-shaped portion 33A toward the second structure 40A. The shape of the recesses 33Aa and 33Ab is not limited thereto. With such recesses 33Aa and 33Ab, the length in the left-right direction of each of the eight connection portions 23A[1] to 23A[8] (each hereinafter simply referred to as "connection portion 23A") between the eight rear plate-shaped portions 33A[1] to 33A[8] of the first structure 30A and the second structure 40A is shorter than the length in the left-right direction of each of the eight connection portions 23B[1] to 23B[8] of the first comparative example. Thus, in the structures 20A and 20B of the embodiment and the first comparative example, at the rear end in the front-rear direction, the distance between the two adjacent connection portions 23A of the structure 20A in the left-right direction is longer than the distance between the two adjacent connection portions 23B of the structure 20B (the distance between the two adjacent rear plate-shaped portions 33A and 33A of the structures 20A and 20B) .

Similar to the structure 20B of the first comparative example, the structure 20A of the embodiment has lower stiffness in the up-down bending than in the front-rear bending, left-right expansion-contraction and torsion about the left-right axis.

In the structure 20A of the embodiment described above, each of the front-rear plate-shaped portions 31A of the first structure 30A includes the hole 31Aa. Therefore, the structure 20A is formed in the shape in which, at the central portion in the front-rear direction, all of the connection portions 21B are removed from the structure 20B of the first comparative example. In addition, each of the front plate-shaped portions 32A of the first structure 30A includes the recesses 32Aa and 32Ab. Therefore, the structure 20A is formed in the shape in which, at the front end in the front-rear direction, the length of each of the connection portions 22A in the left-right direction is shorter and the distance between the two adjacent connection portions 22A in the left-right direction is longer than those of the structure 20B. Furthermore, each of the rear plate-shaped portions 33A of the first structure 30A includes the recesses 33Aa and 33Ab. Therefore, the structure 20A is formed in the shape in which, at the rear end in the front-rear direction, the length of each of the connection portions 23A in the left-right direction is shorter and the distance between the two adjacent connection portions 23A in the left-right direction is longer than those of the structure 20B. Thus, the structure 20A prevents the relatively large increase in stress and stiffness due to the lack of connection portions at the central portion in the front-rear direction compared to the structure 20B when the structures 20A and 20B of the embodiment and the first comparative example are subjected to a load of the up-down bending. At the same time, the structure 20A also prevents the relatively large increase in stress and stiffness due to the longer distance between the two adjacent connection portions 22A in the left-right direction and between the two adjacent connection portions 23A in the left-right direction at the front and rear ends in the front-rear direction compared to the structure 20B. The inventors have confirmed these facts by analysis. As a result, the structure 20A allows deformation into a desired shape through the front-rear bending while reducing damage compared to the structure 20B during the up-down bending.

In addition, the structure 20A of the embodiment is configured as an integrally molded member, formed as a single piece with resin material, rubber material, metal material, or the like. This prevents the effects of joining, such as variations in dimensions and characteristics of the entire structure 20A, as opposed to when the structure is configured by being formed and joined as a plurality of parts.

In the structure 20A of the embodiment, each of the front plate-shaped portions 32A includes the recess 32Aa recessed from the left end face to the right side and the recess 32Ab recessed from the right end face to the left side. However, each of the front plate-shaped portions 32A may include only one of the recesses 32Aa and 32Ab. Even in this case, the length of each of the connection portions 22A connecting each of the front plate-shaped portions 32A and the second structure 40A, in the left-right direction is shorter and the distance between the two adjacent connection portions 22A in the left-right direction is longer than that of the structure 20B. Thus, the same effect as that of the structure 20A is achieved to some extent. The same is true for each of the rear plate-shaped portions 33A.

In the structure 20A of the embodiment, each of the eight front plate-shaped portions 32A includes recesses 32Aa and 32Ab and each of the eight rear plate-shaped portions 33A includes recesses 33Aa and 33Ab. Therefore the distance between the two adjacent connection portions 22A in the left-right direction at the front end in the front-rear direction and the distance between the two adjacent connection portions 23A in the left-right direction at the rear end in the front-rear direction are longer than those of the structure 20B of the first comparative example. However, it is not limited thereto, as long as the distance between the two adjacent connection portions in the left-right direction at the front and rear ends in the front-rear direction is longer than that of the structure 20B. For example, a following structure 20C may be considered.

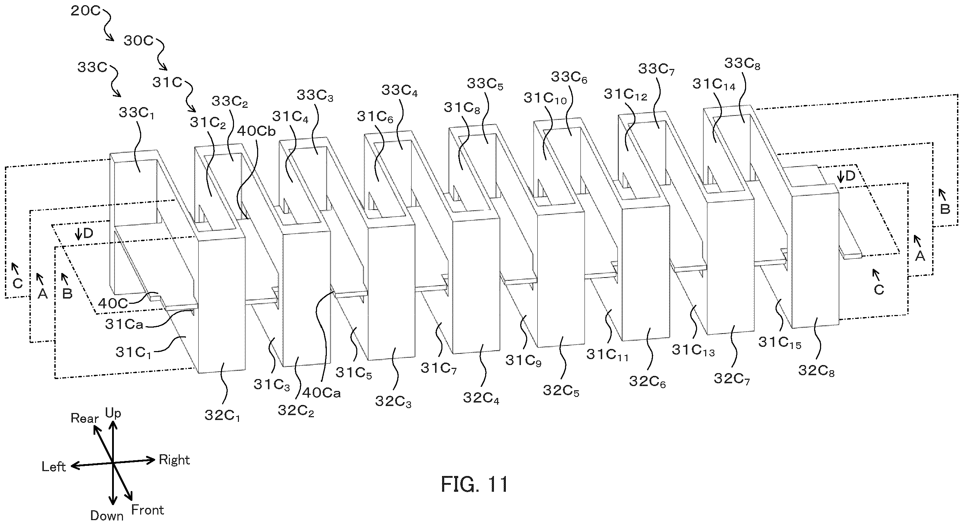

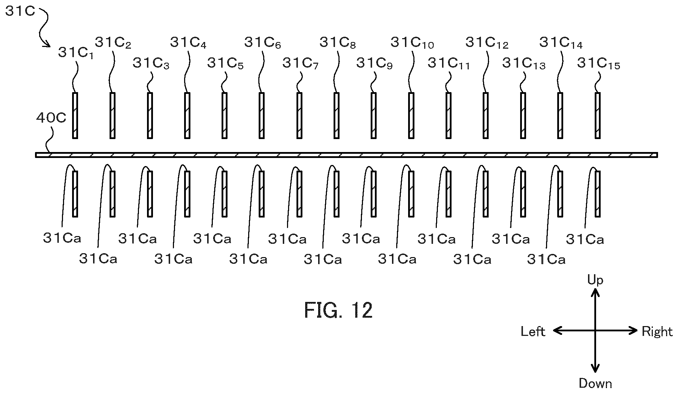

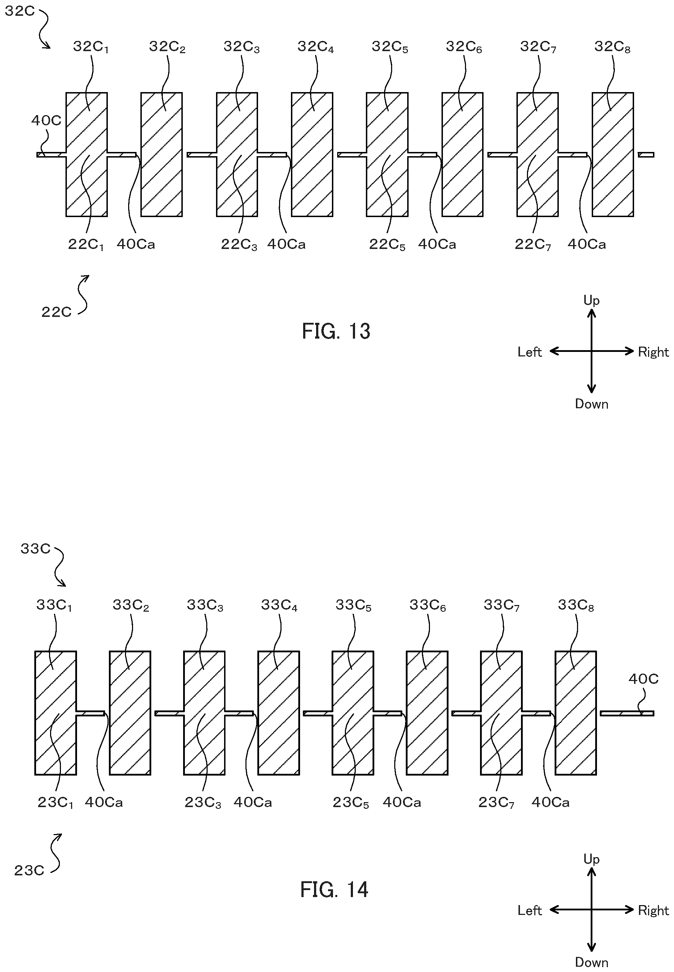

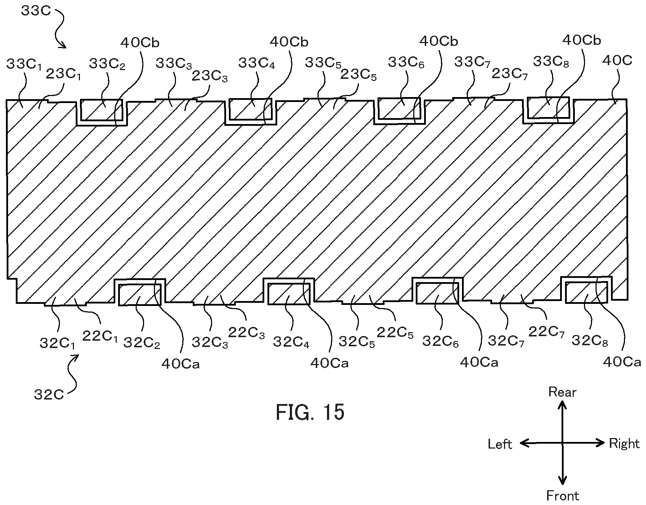

FIG. 11 is an external perspective view of the structure 20C of a modification, FIG. 12 is an A-A cross-sectional view of FIG. 11, FIG. 13 is a B-B cross-sectional view of FIG. 11, FIG. 14 is a C-C cross-sectional view of FIG. 11, and FIG. 15 is a D-D cross-sectional view of FIG. 11. As illustrated in FIGS. 11 to 15, the structure 20C of the modification is formed in a shape based on the structure 20B of the first comparative example (a shape in which a portion of the structure 20B is modified) . The structure 20C of the modification includes a first structure 30C and a second structure 40C in a shape based on the first structure 30B and the second structure 40B.

The first structure 30A includes fifteen front-rear plate-shaped portions 31C[1] to 31C[15] in a shape based on the fifteen front-rear plate-shaped portions 31B[1] to 31B[15] of the first structure 30B of the structure 20B (a shape in which a portion thereof is modified) and corresponding (similar) to the first structure 30A of the structure 20A. The first structure 30A further includes eight front plate-shaped portions 32C[1] to 32C[8] and eight rear plate-shaped portions 33C[1] to 33C[8] in a shape corresponding (similar) to the eight front plate-shaped portions 32B[1] to 32B[8] and the eight rear plate-shaped portions 33B[1] to 33B[8].

As illustrated in FIGS. 11 and 12, each of the front front-rear plate-shaped portions 31C[1] to 31C[15] of the first structure 30C includes a hole 31Ca, just as each of the fifteen front-rear plate-shaped portions 31A[1] to 31A[15] of the first structure 30A of the structure 20A includes the hole 31Aa. Thus, the fifteen front-rear plate-shaped portions 31C[1] to 31C[15] are not connected to the second structure 40C. Therefore, the structure 20C of the modification is formed in a shape in which there is no connection portions between each of the front-rear plate-shaped portions 31C of the first structure 30C and the second structure 40C in the left-right direction at the central portion (other than the front and rear ends) in the front-rear direction. That is, the structure 20C of the modification is formed in a shape in which the fifteen connection portions 21B are removed from the structure 20B of the first comparative example.

As illustrated in FIG. 11 and FIGS. 13 to 15, the second structure 40C differs from the second structure 40B of the structure 20B in that it includes four recesses 40Ca and four recesses 40Cb. Each recess 40Ca is formed by being recessed from the front end face toward the rear such that the inner wall surface thereof faces the left, right and rear end surfaces of the corresponding front plate-shaped portion 32C[2k] (k: 1 to 4) at intervals. In addition, each recess 40Cb is formed by being recessed from the rear end face toward the front such that the inner wall surface thereof faces the left, right and rear end surfaces of the corresponding front plate-shaped portion 33C[2k] (k: 1 to 4) at intervals. Thus, in the structure 20C, the second structure 40C is connected to the four front plate-shaped portions 32C[2k-1] (k: 1 to 4) of the first structure 30C by four connection portions 22C[2k-1] (each hereinafter simply referred to as "connection portion 22C") and to the four rear plate-shaped portions 33C[2k-1] (k:1 to 4) by four connection portions 23C[2k-1] (each hereinafter simply referred to as "connection portion 23C"). On the other hand, the second structure 40C is not connected to the four front plate-shaped portions 32C[2k] and the four rear plate-shaped portions 33C[2k]. Therefore, the structure 20C of the modification is formed, at the front and rear ends in the front-rear direction, in a shape in which the connection portions 22B[2k] and 23B[2k] are removed from the structure 20B of the first comparison example (the connection portions 22B and 23B are removed every other connection portions, respectively), and the distance between the two adjacent connection portions 22C in the left-right direction and the distance between the two adjacent connection portions 23C in the left-right direction are longer than those of the structure 20B.

Similar to the structure 20B of the first comparative example and the structure 20A of the embodiment, the structure 20C of the modification has lower stiffness in the up-down bending than in the front-rear bending, left-right expansion-contraction and torsion about the left-right axis.

In the structure 20C of the modification described above, each of the front-rear plate-shaped portions 31C of the first structure 30C includes the hole 31Ca. Therefore, the structure 20C is formed in the shape in which, at the central portion in the front-rear direction, all of the connection portions 21B are removed from the structure 20B of the first comparative example. In addition, the second structure 40C includes a plurality of recesses 40Ca and a plurality of recesses 40Cb. Therefore, the structure 20C is formed in the shape in which, at the front and rear ends in the front-rear direction, the connection portions 22B and 22C are removed from the structure 20B every other connection portions and the distance between the two adjacent connection portions 22C in the left-right direction and the distance between the two adjacent connection portions 23C in the left-right direction are longer than those of the structure 20B. Thus, the structure 20C prevents the relatively large increase in stress and stiffness due to the lack of connection portions at the central portion in the front-rear direction compared to the structure 20B when the structures 20C and 20B of the modification and the first comparative example are subjected to a load of the up-down bending. At the same time, the structure 20C also prevents the relatively large increases in stress and stiffness due to the longer distance between the two adjacent connection portions 22C in the left-right direction and between the two adjacent connection portions 23C in the left-right direction at the front and rear ends in the front-rear direction compared to the structure 20B. The inventors have confirmed these facts by analysis. As a result, the structure 20C allows deformation into the desired shape through the front-rear bending while reducing damage compared to the structure 20B during the up-down bending.

The structure 20C of the modification is formed in the shape in which, at the front and rear ends in the front-rear direction, the connection portions 22B and 23B are left every other connection portions and removed every other connection portions, respectively, from the structure 20B of the first comparative example. However, it is not limited thereto. For example, the structure 20C may be formed in a shape in which the connection portions 22B and 23B are left every second or third connection portion or the like, and the remainder is removed from the structure 20B.

In the structure 20A of the embodiment, at the front end in the front-rear direction, the distance between the two adjacent connection portions 22A in the left-right direction is longer than that of the structure 20B due to making the length of each of the connection portions 22A in the left-right direction shorter than that of the structure 20B. In the structure 20C of the modification, at the front end in the front-rear direction, the distance between two adjacent connection portions 22C in the left-right direction is longer than that of the structure 20B due to forming the structure 20C in the shape in which the connection portions 22B are removed from the structure 20B every other connection portions. However, a shorter length in the left-right direction of each of the connection portions 22A compared to the structure 20B and removing the connection portions 22B from the structure 20B every other connection portions or the like, may be combined as desired. The same applies to the rear ends of the structures 20A and 20C in the front-rear direction.

The structures 20A and 20C of the embodiment and modification, respectively, are formed in the shape of the combination of the first structures 30A and 30C and the second structures 40A and 40C such that the axis lines L1 of the first structures 30A and 30C and L2 of the second structures 40A and 40C are aligned. However, it is not limited thereto. For example, the structures 20A and 20C may each be formed in a shape of the combination of the first structures 30A and 30C and the second structures 40A and 40C such that the upper end of the first structures 30A and 30C and the upper end of the second structures 40A and 40C are aligned.

The structures 20A and 20C of the embodiment and modification are each formed in the shape of the combination of the first structures 30A and 30C formed in the zigzag shape extending in the left-right direction while winding in the rectangular wave shape in the front-rear direction and the second structures 40A and 40C formed in the flat plate shape extending in the front-rear and left-right directions. However, it is not limited thereto. For example, the first structures 30A and 30C may each extend in the left-right direction while winding in a wavy shape other than the rectangular wave shape, such as sinusoidal or triangular or the like, or they may each extend in the left-right direction in a spiral shape. In the case of the wavy shape, the period and amplitude are not limited to a constant, but may vary randomly, for example. In the case of the spiral shape, the pitch is not limited to a constant but may vary randomly, for example, and the outer diameter may be circular, elliptical or rectangular or the like as viewed in the axial direction. Furthermore, the second structures 40A and 40C may be inclined by plus or minus 10, 20 or 30 degrees or the like, in the front-rear and left-right directions with respect to the plane extending in the front-rear and left-right directions, respectively. In addition, the second structures 40A and 40C may be plate-like with curvature instead of flat (zero-curvature) plate-like, respectively.

The structures 20A and 20C of the embodiment and modification, respectively, are formed in the shape of the combination of the first structures 30A and 30C formed in the wavy shape (specifically, zigzag shape) and the second structures 40A and 40C formed in the flat shape. However, it is not limited thereto. For example, the second structures 40A and 40C may be formed in the wavy shape similar to the first structure 30 instead of the flat shape.

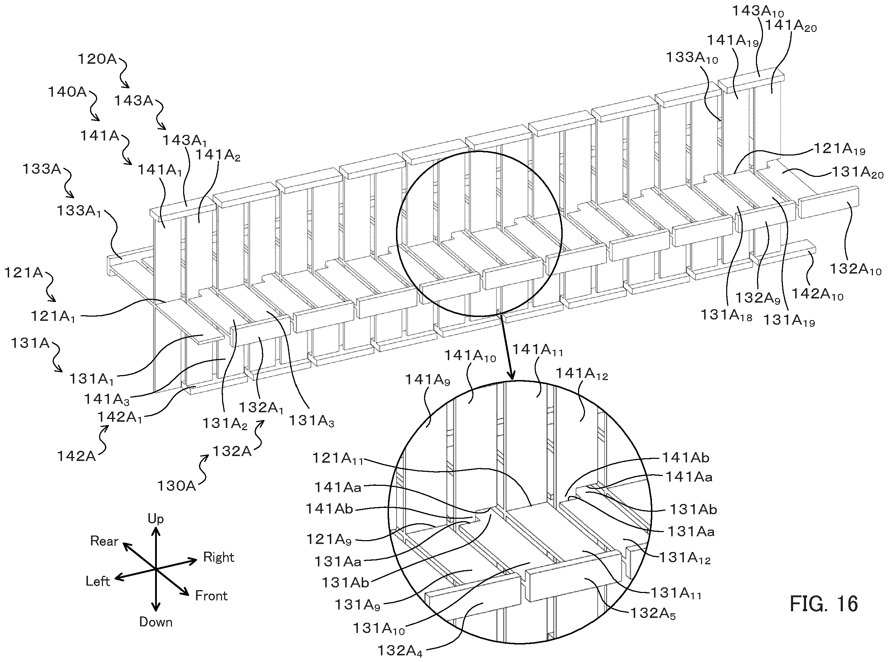

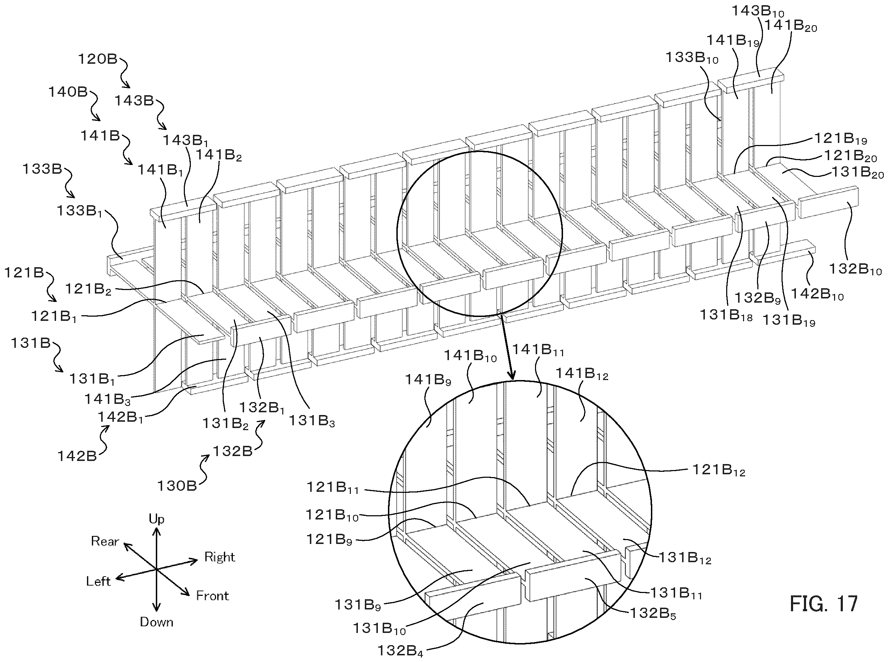

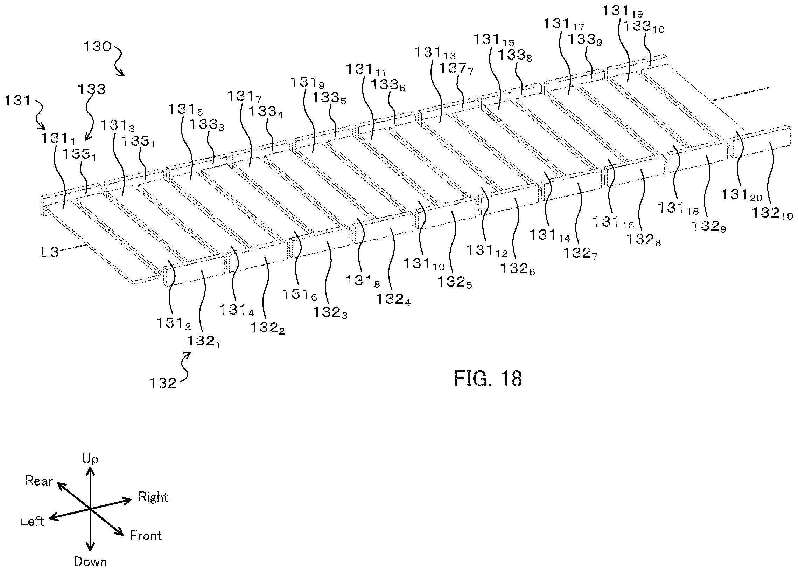

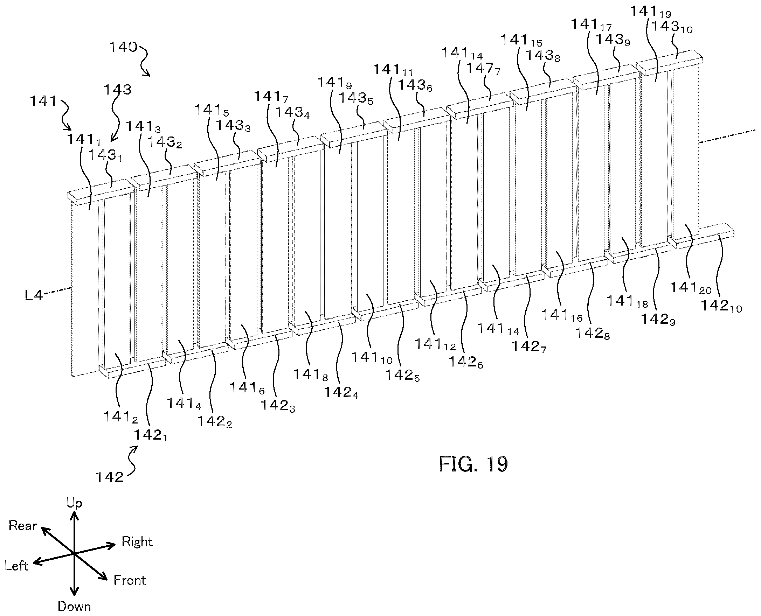

FIG. 16 is an external perspective view of a structure 120A of a modification, FIG. 17 is an external perspective view of a structure 120B of a second comparative example, FIG. 18 is an external perspective view of a first structure 130, and FIG. 19 is an external perspective view of a second structure 140. The left-right, front-rear and up-down directions are as illustrated in FIGS. 16 to 19. The axis line L3 illustrated in FIG. 18 is a line connecting the centers of the first structure 130 in the up-down and front-rear directions of an arbitrary position in the left-right direction, in the left-right direction. The axis line L4 illustrated in FIG. 18 is a line connecting the centers of the second structure 140 in the up-down and front-rear directions of an arbitrary position in the left-right direction, in the left-right direction. In addition, in FIGS. 16 and 17, only some of the components are labeled with subscripted reference numbers for ease of reading.

The structure 120A of the modification illustrated in FIG. 16 and the structure 120B of the second comparative example (basic structure) illustrated in FIG. 17 are manufactured as an integrally molded member by the same manufacturing method as the structure 20A of the embodiment or the like described above. The first structure 130 illustrated in FIG. 18 and the second structure 140 illustrated in FIG. 19 are the basic structures used for the structures 120A and 120B. For ease of understanding, the first structure 130 illustrated in FIG. 18, the second structure 140 illustrated in FIG. 19, the structure 120B of the second comparative example illustrated in FIG. 17, and the structure 120A of the modification illustrated in FIG. 16 are described in the following order.

The first structure 130 illustrated in FIG. 18 is described. As illustrated in FIG. 18, the first structure 130 is formed in a zigzag shape extending in the left-right direction while winding in a rectangular wave shape in the front-rear direction. This first structure 130 includes twenty front-rear plate-shaped portions 131[1] to 131[20] (each hereinafter simply referred to as "front and rear plate-shaped portion 131"), ten front plate-shaped portions 132[1] to 132[10] (each hereinafter simply referred to as "front plate-shaped portion 132"), and ten rear plate-shaped portions 133[1] to 133[10] (each hereinafter simply referred to as "rear plate-shaped portion 133").

The twenty front-rear plate-shaped portions 131[1] to 131[20] are each formed in a rectangular flat plate shape extending in the front-rear direction with a constant thickness (length in the up-down direction) and width (length in the left-right direction), and are arranged side by side at intervals in the left-right direction. In the modification, the twenty front-rear plate-shaped portions 131[1] to 131[20] are all formed in the same shape, each with the length in the front-rear direction, width and thickness in order from the longest side.

The ten front plate-shaped portions 132[1] to 132[10] are each formed in a rectangular flat plate shape extending in the left-right direction with a constant thickness (length in the front-rear direction) and width (length in the up-down direction). The left end of the front plate-shaped portion 132[m] (m: 1 to 10) is each connected to the front end of the front-rear plate-shaped portion 131[2m], and the right end of the front plate-shaped portion 132[n] (n: 1 to 9) is each connected to the front end of the front-rear plate-shaped portion 131[2n+1]. In the modification, the ten front plate-shaped portions 132[1] to 132[10] are all formed in the same shape, each with the length in the left-right direction, width and thickness in order from the longest side.

The ten rear plate-shaped portions 133[1] to 133[10] are each formed in a rectangular flat plate shape extending in the left-right direction with a constant thickness (length in the front-rear direction) and width (length in the up-down direction) . The left end of the rear plate-shaped portion 133[m] (m: 1 to 10) is each connected to the rear end of the front-rear plate-shaped portion 131[2m-1], and the right end of the rear plate-shaped portion 133[m] is each connected to the front-rear end of the rear plate-shaped portion 131[2m]. In the modification, the ten rear plate-shaped portions 133[1] to 133[10] are all formed in the same shape as the ten front plate-shaped portions 132[1] to 132[10], each with the length in the left-right direction, width and thickness in order from the longest side.

The first structure 130 as a whole is designed to have lower stiffness in the up-down bending and torsion about the left-right axis than in the front-rear bending and left-right expansion-contraction. The reference state of the first structure 130 is the state illustrated in FIG. 18.

The second structure 140 illustrated in FIG. 19 is described next. As illustrated in FIG. 19, the second structure 140 is formed in a shape by rotating the first structure 130 by 90 degrees clockwise around the axis line L3, as viewed from the left side of FIG. 18. That is, the second structure 140 is formed in a zigzag shape extending in the left-right direction while winding in a rectangular wave shape in the up-down direction, and includes twenty upper-lower plate-shaped portions 141[1] to 141[20], ten lower plate-shaped portions 142[1] to 142[10] and ten upper plate-shaped portions 143[1] to 143[10] in a shape each corresponding (rotated by 90 degrees) to the twenty front-rear plate-shaped portions 131[1] to 131[20], ten front plate-shaped portions 132[1] to 132[10] and ten rear plate-shaped portions 133[1] to 133[10] of the first structure 130.

The second structure 140 as a whole is designed to have lower stiffness in the up-down bending and torsion about the left-right axis than in the front-rear bending and left-right expansion-contraction. The reference state of the second structure 140 is the state illustrated in FIG. 19.

The structure 120B of the second comparative example illustrated in FIG. 17 is described next. As illustrated in FIG. 17, the structure 120B of the second comparative example is formed in a shape of the simple combination of the first structure 130 illustrated in FIG. 18 and the second structure 140 illustrated in FIG. 19 such that the axis lines L3 of the first structure 130 and L4 of the second structure 140 are aligned. Thus, the structure 120B of the second comparative example includes a first structure 130B and a second structure 140B in a shape each corresponding (similar) to the first structure 130 and the second structure 140.

The first structure 130B includes twenty front-rear plate-shaped portions 131B[1] to 131B[20], ten front plate-shaped portions 132B[1] to 132B[10] and ten rear plate-shaped portions 133B[1] to 133B[10] in a shape each corresponding (similar) to the twenty front-rear plate-shaped portions 131[1] to 131[20], the ten front plate-shaped portions 132 [1] to 132[10], and the ten rear plate-shaped portions 133[1] to 133[10] of the first structure 130.

The second structure 140B includes twenty upper-lower plate-shaped portions 141B[1] to 141B[20], ten lower plate-shaped portions 142B[1] to 142B[10] and ten upper plate-shaped portions 143B[1] to 143B[10] in a shape each corresponding (similar) to the twenty upper-lower plate-shaped portions 141[1] to 141[20], the ten lower plate-shaped portions 142[1] to 142[10] and the ten upper plate-shaped portions 143[1] to 143[10] of the second structure 140.

In the structure 120B of the second comparative example, as illustrated in FIG. 17, the twenty front-rear plate-shaped portions 131B[1] to 131B[20] of the first structure 130B and the twenty upper-lower plate-shaped portions 141B[1] to 141B[20] of the second structure 140B are connected by twenty connection portions 121B[1] to 121B[20] (each hereinafter simply referred to as "connection portion 121B"). Thus, in the structure 120B, the twenty connection portions 121B appear at intervals along the left-right direction. In the structure 120B, in the left-right direction, the distance between the two adjacent connection portions 121B is equal to the distance between the two adjacent front-rear plate-shaped portions 131B and the distance between the two adjacent upper-lower plate-shaped portions 141B.

The structure 120B of the second comparative example is formed in the shape of the simple combination of the first structure 130 (130B), which has lower stiffness in the up-down bending and torsion about he left-right axis than in the front-rear bending and left-right expansion-contraction, and the second structure 140 (140B), which has lower stiffness in the front-rear bending and torsion about he left-right axis than in the up-down bending and left-right expansion-contraction. Therefore, the structure 120B has low stiffness in the torsion about the left-right axis, which has relatively low stiffness in common with the first and second structures 130B and 140B, than in the front-rear bending, left-right bending and left-right expansion-contraction.

The structure 120A of the modification illustrated in FIG. 16 is described next. As illustrated in FIG. 16, the structure 120A of the modification is formed in a shape based on the structure 120B of the second comparison example (with some modifications). The structure 120A of the modification includes a first structure 130A and a second structure 140A in a shape based on the first structure 130B and the second structure 140B.

The first structure 130A includes twenty front-rear plate-shaped portions 131A[1] to 131A[20] in a shape based (with some modifications) on the twenty front-rear plate-shaped portions 131B[1] to 131B[20] of the first structure 130B of the structure 120B, ten front plate-shaped portions 132A[1] to 132A[10] and ten rear plate-shaped portions 133A[1] to 133A[10] in a shape corresponding (similar) to the ten front plate-shaped portions 132B[1] to 132B[10] and the ten rear plate-shaped portions 133B[1] to 133B[10].

As illustrated in FIG. 16, the ten front-rear plate-shaped portions 131A[2m] (m: 1 to 10) of the first structure 130A differ from the ten front-rear plate-shaped portions 131B[2m] of the first structure 130B of the structure 120B in that each of them includes a recess 131Aa and narrow portion 131Ab. Each recess 131Aa is formed in the central portion in the front-rear direction, with a rectangular shape recessed from the left end face toward the right. The depth (length in the left-right direction) of the recess 131Aa is deeper than 1/2 the width (length in the left-right direction) of the front-rear plate-shaped portion 131A[2m]. The narrow portion 131Ab is the portion of the front-rear plate-shaped portion 131A[2m] whose width is narrowed by the recess 131Aa.

The second structure 140A includes twenty upper-lower plate-shaped portions 141A[1] to 141A[20] in a shape based (with some modifications) on the twenty upper-lower plate-shaped portions 141B[1] to 141B[20] of the second structure 140B of the structure 120B, ten lower plate-shaped portions 142A[1] to 142A[10] and ten upper plate-shaped portions 143A[1] to 143A[10] in a shape corresponding (similar) to the ten lower plate-shaped portions 142B[1] to 142B[10] and the ten upper plate-shaped portions 143B[1] to 143B[10].

The ten upper-lower plate-shaped portions 141A[2m] (m: 1 to 10) of the second structure 140A differ from the ten upper-lower plate-shaped portions 141B[2m] of the second structure 140B of the structure 120B in that each of them includes a recess 141Aa and narrow portion 141Ab. Each recess 141Aa is formed in the central portion in the front-rear direction, with a rectangular shape recessed from the right end face toward the left. The depth (length in the left-right direction) of the recess 141Aa is deeper than 1/2 the width (length in the left-right direction) of the upper-lower plate-shaped portion 141A[2m] . The narrow portion 141Ab is the portion of the upper-lower plate-shaped portion 141A[2m] whose width is narrowed by the recess 141Aa.

The inner wall surface of the recess 131Aa of the front-rear plate-shaped portion 131A[2m] **(m:** 1 to 10) of the first structure 130A faces the front, right and rear end surfaces of the narrower portion 141Ab of the upper-lower plate-shaped portion 141A[2m] of the second structure 140A at intervals. The inner wall surface of the recess 141Aa of the upper-lower plate-shaped portion 141A[2m] of the second structure 140A faces the upper, left and lower end surfaces of the narrower portion 131Ab of the front-rear plate-shaped portion 131A[2m] of the first structure 130 at intervals. Thus, in the structure 120A, the ten front-rear plate-shaped portions 131A[2m-1] of the first structure 130A and the ten upper-lower plate-shaped portions 141A[2m-1] of the second structure 140A are connected by ten connection portions 121A[2m-1] (each hereinafter simply referred to as "connection portion 121A"). On the other hand, the ten front-rear plate-shaped portions 131A[2m] of the first structure 130A are not connected to the ten upper-lower plate-shaped portions 141A[2m] . Therefore, the structure 120A of the modification is formed in a shape in which the ten connection portions 121B [2m] are removed from the structure 120B of the second comparison example (the connection portions 121B are removed every other connection portions), and the distance between the two adjacent connection portions 121A in the left-right direction is longer than that of the structure 120B.

Similar to the structure 120B of the second comparative example, the structure 120A of the modification has low stiffness in the torsion about the left-right axis than in the front-rear bending, left-right bending and left-right expansion-contraction.

In the structure 120A of the modification described above, each of the ten front-rear plate-shaped portions 131A[2m] **(m:** 1 to 10) of the first structure 130A includes the recess 131Aa and the narrow portion 131Ab, and each of the ten upper-lower plate-shaped portions 141A[2m] of the second structure 140A includes the recess 141Aa and the narrow portion 141Ab. Therefore, the structure 120A is formed in the shape in which the ten connection portions 121B [2m] are removed from the structure 120B of the second comparison example, or the connection portions 121B are removed every other connection portions, and the distance between the two adjacent connection portions 121A in the left-right direction is longer than that of the structure 120B. Thus, the structure 120A prevents the relatively large increase in stress and stiffness due to the longer distance between the two adjacent connection portions 121A in the left-right direction compared to the structure 20B when the structures 120A and 120B of the modification and the second comparative example are subjected to a load of the up-down bending. The inventors have confirmed these facts by analysis. As a result, the structure 120A allows deformation to the desired shape by the torsion about the left-right axis with less damage than the structure 120B in the up-down bending.

The structure 120A of the modification is formed in the shape in which the connection portions 121B are left every other connection portions and removed every other connection portions from the structure 120B of the second comparative example. However, it is not limited thereto. For example, the structure 120A may be formed in a shape in which the connection portions 121B are left every second or third connection portions or the like, and the remainder is removed from the structure 120B.

The structure 120A of the modification is formed in the shape of the combination of the first structure 130A formed in the zigzag shape extending in the left-right direction while winding in the rectangular wave shape in the front-rear direction, and the second structure 140A formed in the zigzag shape extending in the left-right direction while winding in the rectangular wave shape in the up-down direction. However, it is not limited thereto. For example, the first structure 130A and the second structure 140A may each extend in the left-right direction while winding in a wavy shape other than the rectangular wave shape, such as sinusoidal or triangular or the like. The period and amplitude of each of the first structure 130A and the second structure 140A are not limited to a constant, but may vary randomly, for example.

The structures 20A, 20C and 120A of the embodiment and modification are configured as the integrally molded members integrally molded from resin material, rubber material or metal material, or the like. However, they may be configured by being molded and joined as multiple parts. For example, for the structure 20A, the upper and lower parts of the first structure 30A above and below the second structure 40A, respectively, may be molded and the second structure 40B may be molded, and these parts may be joined to form the structure 20A.

The correspondence relationship between the primary components of the embodiment and the primary components of the disclosure, regarding which the problem is described in Summary, should not be considered to limit the components of the disclosure, regarding which the problem is described in Summary, since the embodiment is only illustrative to specifically describes the aspects of the disclosure, regarding which the problem is described in Summary. In other words, the disclosure, regarding which the problem is described in Summary, should be interpreted on the basis of the description in the Summary, and the embodiment is only a specific example of the disclosure, regarding which the problem is described in Summary.

The aspect of the disclosure is described above with reference to the embodiment. The disclosure is, however, not limited to the above embodiment but various modifications and variations may be made to the embodiment without departing from the scope of the disclosure.

### [ADDENDUM]

A structure according to the present disclosure is a structure is formed based on a basic structure by combining a first structure extending in a predetermined direction with a first repeating shape and a second structure, which is either in a plate shape or extending in the predetermined direction with a second repeating shape, such that a plurality of connection portions are arranged at intervals along the predetermined direction. Furthermore, the structure is formed in a shape in which a distance between the two adjacent connection portions in the predetermined direction is longer than that in the basic structure.

The structure is formed in the shape in which the distance between the two adjacent connection portions in the predetermined direction is longer than that in the basic structure. Such a configuration prevents the relatively large increase in stress and/or stiffness locally, specifically between the two adjacent connection portions, when deformed in the specific deformation mode. As a result, deforming the structure into a desired shape becomes possible while reducing damage to the structure. Here, examples of the "first repeating shape" and the "second repeating shape" include shapes such as rectangular waves, sinusoidal waves, triangular waves, or spiral shapes, or similar patterns.

In the structure of the present disclosure, the structure may be formed in a shape where the distance between the two adjacent connection portions in the predetermined direction is longer than that of the basic structure due to the length of the connection portion in the predetermined direction being shorter compared to the basic structure. In this case, the second structure may be the plate shape, and the structure may be formed in a shape where the distance between the two adjacent connection portions in the predetermined direction is longer than that of the basic structure due to the structure including first recesses, each of which is recessed in the predetermined direction around the second structure on an end face in the predetermined direction with respect to the first structure of the basic structure.

In the structure of the present disclosure, the structure may be formed in a shape in which the distance between the two adjacent connection portions in the predetermined direction is longer than that of the basic structure by removing a portion of the plurality of connection portions of the basic structure. In this case, the second structure may be the plate shape, and the structure may be formed in a shape in which the portion of the plurality of connection portions of the basic structure is removed by the structure including second recesses on the second structure of the basic structure to avoid connection with the first structure. In addition, the first repeating shape and the second repeating shape may be both wavy, and the structure may be formed in a shape in which the portion of the plurality of connection portions of the basic structure is removed by the structure including third recesses on the first structure of the basic structure to avoid connection with the second structure thereof and including fourth recesses on the second structure of the basic structure to avoid connection with the first structure thereof.

In the structure of the present disclosure, the first repeating shape may be both wavy, the second structure may be the plate shape, a plurality of connection portions in the basic structure may appear at intervals along the predetermined direction at any location in a second direction different from the predetermined direction due to the connection portions extending in the predetermined direction in a wavy and undulating manner in the second direction, and the structure may be formed in a shape in which the connection portions are removed from the basic structure along the predetermined direction at the central portion in the second direction, and the distance between the two adjacent connection portions in the predetermined direction is longer than that of the basic structure at one side and the other side of the central portion in the second direction, respectively.

In the structure of the present disclosure, the structure may be an integrally molded member.

## Claims

1. A structure formed by combining a first structure extending in a predetermined direction with a first repeating shape and a second structure, which is either in a plate shape or extending in the predetermined direction with a second repeating shape, such that a plurality of connection portions are arranged at intervals along the predetermined direction,
wherein the second structure is in a plate shape, and
the first structure includes first recesses, each of which is recessed in the predetermined direction from the periphery of the second structure on an end face of the first structure in the predetermined direction toward the second structure.

2. A structure formed by combining a first structure extending in a predetermined direction with a first repeating shape and a second structure, which is either in a plate shape or extending in the predetermined direction with a second repeating shape, such that a plurality of connection portions are arranged at intervals along the predetermined direction,
wherein the second structure is in a plate shape and further includes second recesses arranged at intervals along the predetermined direction to avoid connection with the first structure.

3. A structure formed by combining a first structure extending in a predetermined direction with a first repeating shape and a second structure, which is either in a plate shape or extending in the predetermined direction with a second repeating shape, such that a plurality of connection portions are arranged at intervals along the predetermined direction,
wherein both the first repeating shape and second repeating shape are wavy,
the first structure includes third recesses, each recessed in the predetermined direction from an end face in the predetermined direction to avoid connection with the second structure, and first narrow portions, each shorter in the predetermined direction compared to portions without the third recesses as viewed in an extending direction of the first repeating shape, arranged at intervals along the predetermined direction,
the second structure includes fourth recesses, each recessed in the predetermined direction from an end face in the predetermined direction to avoid connection with the first structure, and second narrow portions, each shorter in the predetermined direction compared to portions without the fourth recesses as viewed in an extending direction of the second repeating shape, arranged at intervals along the predetermined direction,
an inner wall surface of the third recess surrounds a portion of the second narrow portion at intervals, and
an inner wall surface of the fourth recess surrounds a portion of the first narrow portion at intervals.

4. The structure according to claim 1 or 2,
wherein the first repeating shape is wavy, extending in the predetermined direction while undulating in a second predetermined direction different from the predetermined direction,
the second structure is in a plate shape, and
the structure is formed in a shape such that there are no connection portions along the predetermined direction at the central portion in the second predetermined direction, while the plurality of connection portions are included at intervals along the predetermined direction on one side and the other side of the central portion in the second predetermined direction, respectively.

5. The structure according to any one of claims 1 to 3,
wherein the structure is an integrally molded member.
